# FASCICULE DE BREVET EUROPEEN

(11) **EP 1 183 770 B1**
(45) Date de publication et mention de la délivrance du brevet: **02.05.2003**
(21) Numéro de dépôt: 00927349.1
(22) Date de dépôt: 17.05.2000
(51) Int. Cl.: H02K 37/14, H02K 16/02

(54) **MOTEUR PAS-A-PAS A DOUBLE BOBINE DANS UN PLAN**
SCHRITTMOTOR MIT DOPPELSPULE IN EINER EBENE
STEP MOTOR WITH DOUBLE COIL IN A PLANE

(30) Priorité: 21.05.1999 FR 9906606
(43) Date de publication de la demande: 06.03.2002
(73) Titulaire: Eaton, 98000 Monaco (MC)
(72) Inventeur: GOUBELY, Aimé, F-06340 La Trinité (FR); ARMIROLI, Jean, Beaulieu Palace, F-06310 Beaulieu sur Mer (FR)
(74) Mandataire: Littolff, Denis
(86) Numéro de dépôt international: FR0001317
(87) Numéro de publication internationale: WO00072429

(56) Documents cités:
- DE-A- 19 616 798
- PATENT ABSTRACTS OF JAPAN vol. 1998, no. 09, 31 juillet 1998 (1998-07-31) -& JP 10 094237 A (DENSO CORP), 10 avril 1998 (1998-04-10)
- PATENT ABSTRACTS OF JAPAN vol. 014, no. 376 (P-1092), 14 août 1990 (1990-08-14) -& JP 02 140727 A (CANON INC), 30 mai 1990 (1990-05-30)
- PATENT ABSTRACTS OF JAPAN vol. 1996, no. 09, 30 septembre 1996 (1996-09-30) -& JP 08 130865 A (CANON INC), 21 mai 1996 (1996-05-21)
- PATENT ABSTRACTS OF JAPAN vol. 1996, no. 06, 28 juin 1996 (1996-06-28) -& JP 08 047236 A (CANON INC), 16 février 1996 (1996-02-16)

## Description

La présente invention concerne le domaine des moteurs pas à pas. Elle s'applique plus précisément à des moteurs à deux bobines d'induction et un rotor constitué d'un aimant permanent. Secondairement, l'invention concerne également des associations de tels moteurs.

Le problème visé à titre principal est celui de l'encombrement : la plupart des moteurs pas à pas actuels, lorsqu'ils comportent deux bobines correspondant à deux phases d'excitation distinctes, occupent un espace relativement important car les bobines sont disposées l'une à la suite de l'autre dans la direction de l'axe central de rotation.

Cette configuration n'est pas adaptée à toutes les utilisations des moteurs pas à pas, car le choix d'un moyen moteur dans une application dépend bien souvent de l'espace disponible pour disposer ledit moyen. Dans l'automobile, par exemple, les actionneurs rotatifs basés sur des moteurs pas à pas investissent de plus en plus massivement les véhicules, dans des applications dans lesquelles une miniaturisation croissante est requise. La miniaturisation n'est cependant pas suffisante : par endroits, il convient également de disposer d'éléments de configuration géométrique particulière, aptes à s'adapter à l'espace disponible.

L'invention propose à cet effet un moteur pas à pas ayant une configuration d'allure globalement plane, dans laquelle les bobines n'agissent plus, comme dans l'art antérieur précité, à des niveaux axiaux différents de l'aimant permanent constituant le rotor. Elles sont au contraire disposées au même niveau, et agissent par conséquent sur la même zone périphérique radiale du rotor.

A cet effet, selon l'invention la culasse magnétique est constituée de deux plaques planes parallèles reliées par deux entretoises autour desquelles sont disposées lesdites bobines, deux orifices coaxiaux pratiqués dans lesdites plaques délimitant un espace d'allure cylindrique dans lequel est placé le rotor.

Les entretoises, prenant la forme de colonnes d'allure cylindrique, réalisent de plus la liaison mécanique entre les plaques planes parallèles. Le circuit magnétique de chaque bobine est donc constitué de deux pièces principales (les plaques planes) et de deux pièces de liaison (les entretoises).

Il n'y a par conséquent pas de stator interne, et la précision de positionnement relatif de ces pièces est facile à obtenir. Cette caractéristique a évidemment une incidence favorable sur le coût de fabrication des moteurs de l'invention. Ce coût est encore abaissé par le faible nombre des pièces à assembler, bien moindre que dans les moteurs à bobines superposées évoqués.

De manière générale, la réalisation d'un moteur plat est avantageuse car la faible épaisseur facilite l'intégration du moteur dans nombre de systèmes.

Pour compléter la description de la structure, il est à noter que chaque plaque comporte des dents orientées sensiblement perpendiculairement à son plan, en direction de l'autre plaque, disposées en périphérie des orifices de passage du rotor, les dents issues des deux plaques s'interpénétrant pour former une cage dans laquelle est logé le rotor.

Il existe déjà des moteurs présentant une telle configuration, par exemple décrits dans les documents JP-A-10094237 et DE-A-19616798. Dans le premier cité, le problème posé et résolu consiste à faciliter l'assemblage des pièces, et les plaques comportant les dents présentent à cet effet chacune deux parties distinctes correspondant aux circuits magnétiques des deux bobines, reliées par des éléments de couplage que l'on sectionne au cours du processus de fabrication.

Les deux plaques initiales à assembler se transforment ainsi en quatre plaques formant deux circuits magnétiques physiquement distincts, pour éviter les interférences et les pertes magnétiques.

Les circuits magnétiques associés aux bobines du système décrit dans DE-A-19616798 sont également physiquement dissociés, dans leurs versions à quatre ou à deux bobines, une plaque réunificatrice en matériau amagnétique formant un boîtier conférant une unité structurelle à l'ensemble.

En d'autres termes, les parties supérieures d'une part, et inférieures d'autre part, des circuits magnétiques associés aux bobines ne sont pas d'une seule pièce, alors qu'il n'existe qu'une plaque supérieure et qu'une plaque inférieure dans le moteur de l'invention.

La distance entre la périphérie de chaque orifice de passage du rotor et le bord libre de la plaque dans laquelle il est pratiqué est minimale au niveau du diamètre de l'orifice perpendiculaire à la droite reliant l'axe des entretoises ou des bobines, de sorte que les flux magnétiques des deux bobines ne se perturbent pas et sont canalisés, via les dents, de chaque côté du plan formé par les diamètres précités des deux orifices.

Il en résulte que, pour respecter la séparation entre les deux circuits magnétiques, le moteur pas à pas de l'invention est caractérisé en ce que lesdites plaques sont au nombre de deux, l'une des plaques comporte n/2 dents, alors que la seconde n'en comporte que n/2-1, les circuits magnétiques associés à chaque bobine comportant également respectivement n/2 et n/2-1 dents.

Chaque phase ou bobine est donc schématiquement associée à un circuit magnétique comprenant l'entretoise, deux portions de plaques s'achevant à l'endroit de largeur minimale de part et d'autre de l'orifice de passage du rotor, ledit circuit étant "fermé" par les dents associées auxdites portions de plaques, qui s'interpénètrent et sont séparées par un entrefer.

De préférence, les bobines sont identiques et ledit diamètre est la médiatrice du segment joignant les axes des entretoises.

Il y a alors quasi symétrie des deux circuits magnétiques correspondant aux deux phases, lesdits circuits pouvant être vus comme étant disposés de part et d'autre du rotor, et séparés par lui.

En fait, les dents formant la cage entourant le rotor ont une largeur angulaire sensiblement égale à celle des pôles du rotor, au moins dans la zone de liaison à la plaque dont elles sont issues.

De plus, les dents disposées de part et d'autre du diamètre de l'orifice de passage du rotor perpendiculaire à la droite reliant les axes des entretoises sont disposées selon une périodicité égale au double de la largeur angulaire de chaque dent dans sa zone de liaison à la plaque, et sont de forme trapézoïdale, leur largeur angulaire se réduisant vers leur extrémité libre.

La forme trapézoïdale résulte notamment de la nécessité d'établir un entrefer sensiblement constant entre les dents contiguës. Pour ce qui conceme la périodicité, il n'y a pas de continuité sur la totalité de la périphérie de la cage, notamment pour pouvoir aboutir à un nombre de pas par tour équivalent à celui des moteurs de l'art antérieur, et afin de permettre la commutation électronique des phases.

Dans l'invention, les groupes de dents disposés de part et d'autre du plan coupant les diamètres des orifices de passage du rotor perpendiculairement à la ligne joignant les axes des entretoises sont décalés d'un quart de période angulaire.

Selon une configuration possible, le moteur pas à pas de l'invention est tel que les plaques ont une portion centrale d'allure rectangulaire et des extrémités semi-circulaires, l'orifice de passage du rotor étant centré dans la portion centrale et les axes des entretoises, qui sont d'allure cylindrique, contenant les centres des arcs semi-circulaires desdites extrémités.

La réalisation d'un moteur selon l'invention est alors d'une simplicité sans commune mesure avec les moteurs existants, puisqu'il suffit d'assembler les entretoises à une plaque, puis d'ajouter les bobines, et de fermer le circuit magnétique par montage de la seconde plaque.

Selon l'invention, c'est à dire en conservant les caractéristiques mises en exergue ci-dessus, il est également possible de réaliser l'association d'au moins deux moteurs pas à pas, ladite association se caractérisant en ce que les plaques desdits moteurs sont solidarisées au niveau d'une entretoise, les moteurs contigus ayant par conséquent une entretoise et une bobine commune.

De préférence, les plaques disposées de chaque côté des entretoises sont d'une seule pièce. Les configurations géométriques possibles sont multiples : selon une possibilité, les axes des bobines sont coplanaires.

Selon une autre configuration, les axes des bobines dont disposés dans deux plans sécants selon l'axe de la bobine commune : on aboutit alors à des plaques planes parallèles en V, la surface de raccordement entre les deux branches du V telles que précédemment défini ayant bien entendu la même épaisseur que les extrémités desdites branches, du fait de l'unicité de la pièce.

Dans le cas de l'association de deux moteurs, trois bobines encadrent deux rotors, la bobine de la base du V étant commune auxdits rotors.

Cette configuration procure un gain de place par rapport à l'utilisation de deux moteurs plats selon l'invention. Elle permet de surcroît un gain de coût, puisqu'on économise notamment une bobine, une entretoise, un connecteur, un circuit électronique, un boîtier etc... La commande des deux moteurs reste cependant indépendante.

En reliant mécaniquement les rotors des deux moteurs, on ajoute de plus leurs couples moteurs, ce qui confère au ratio puissance / encombrement une valeur très intéressante. Les vibrations sur le pignon de sortie sont enfin réduites, car il y a deux points de contact : le bruit en sortie s'en trouve corollairement diminué.

Une association de deux moteurs peut également être utilisée avec un seul moteur alimenté : la rotation du rotor du second moteur, entraîné par le pignon de sortie crée alors un signal dans la bobine non commune de ce second moteur. Ce signal peut être à son tour utilisé pour tester l'état du système : existence d'une butée, etc ...

L'invention va à présent être décrite en détail, notamment en référence aux dessins annexés, pour lesquels :
- la figure 1 est une vue en perspective d'un moteur selon la présente invention ;
- la figure 2 montre une vue de face du moteur de la figure 1 ;
- la figure 3 représente une vue en perspective de l'une des plaques planes ;
- la figure 4 est une vue en perspective de l'autre plaque plane ;
- la figure 5 est une vue de dessus d'une portion de la plaque de la figure 4 ;
- la figure 6 est une vue en perspective éclatée du moteur de l'invention ;
- la figure 7 représente une vue schématique de dessus d'un tel moteur placé dans le boîtier d'un actionneur ; et
- la figure 8 est une vue en perspective de l'association de deux moteurs selon l'invention.

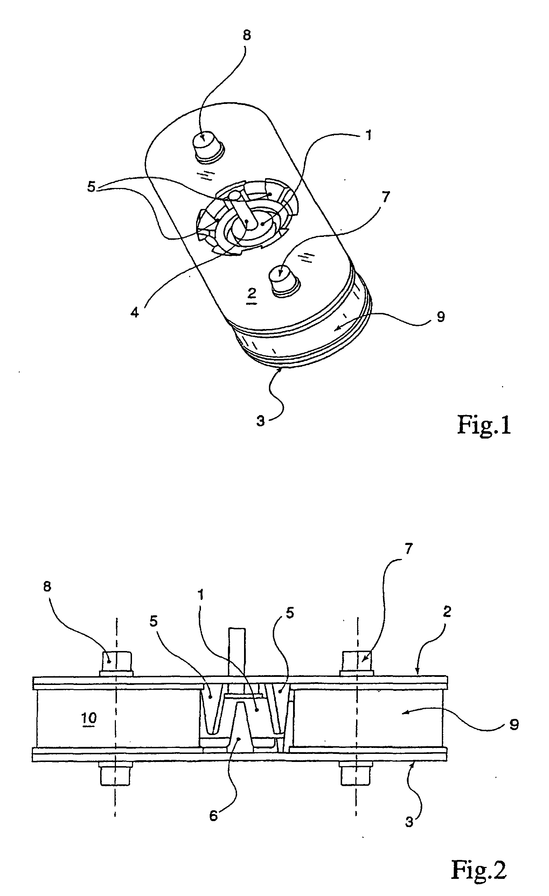

Dans la perspective de la figure 1, ainsi que dans les figures suivantes, l'aimant permanent (1) constituant le rotor comporte par exemple douze pôles alternativement nord (N) et sud (S), et cette donnée conditionne comme on le verra le nombre de dents dépassant des plaques planes (2, 3).

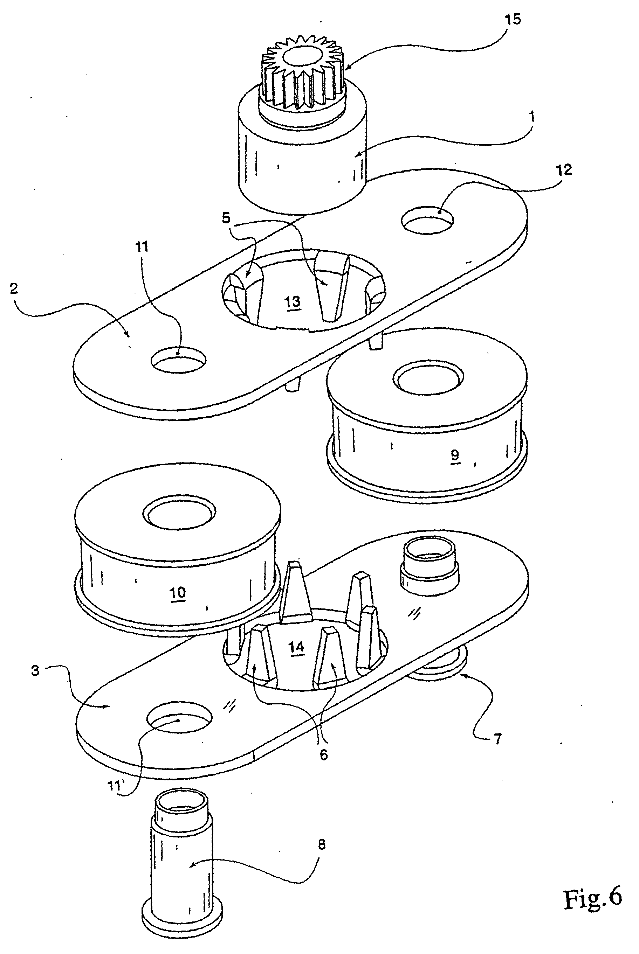

Le rotor est doté d'un arbre de sortie (4) pouvant être mécaniquement relié à un pignon (voir figure 6), et il tourne dans la cage constituée des dents (5, 6) se développant respectivement à partir des plaques (2, 3), perpendiculairement et en direction de la plaque (3, 2) homologue parallèle.

Lesdites plaques (2, 3) planes sont maintenues parallèles à l'aide d'entretoises (7, 8) dont seules les extrémités sont visibles, autour desquelles sont disposées les bobines (9, 10), ces éléments apparaissant plus clairement en figure 2.

Cette structure d'allure plane comporte une cage centrale délimitée par les dents descendantes (5) et montantes (6), autour de laquelle sont disposées les bobines (9, 10) d'induction magnétique.

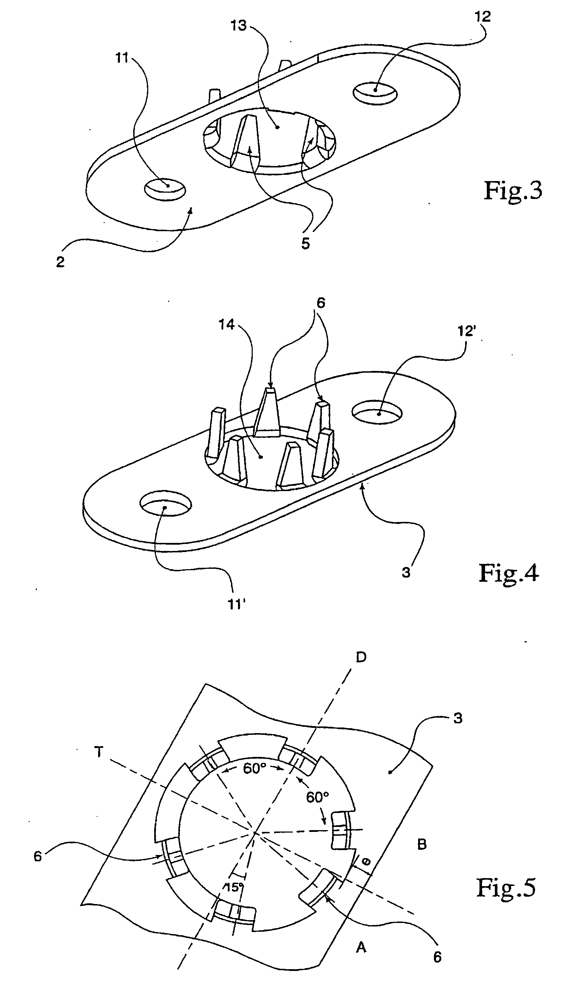

Les figures suivantes (3, 4) précisent la configuration de chaque plaque plane (2, 3). En figure 3, la plaque (2) comporte deux orifices d'extrémité (11, 12) dont le centre est confondu avec celui des extrémités semi-circulaires de la plaque (2). L'axe des entretoises (7, 8), et par conséquent des bobines (9, 10), passe parce point puisque la liaison mécanique entre les entretoises (7, 8) et la plaque (2) se fait à cet emplacement.

La plaque (3), montrée en figure 4, comporte des orifices d'extrémité (11', 12') ayant exactement les mêmes caractéristiques et fonctions. Leur diamètre peut cependant, selon la forme des entretoises (7, 8), être différent.

La plaque plane (2) est vue de l'extérieur alors que la plaque plane (3) est représentée de l'intérieur. Lorsqu'elles sont fixées l'une à l'autre au moyen des entretoises (7, 8), les orifices centraux (13, 14) permettant le passage du rotor (1) sont coaxiaux.

Ces figures montrent également très clairement les zones latérales de distance minimale entre lesdits orifices (13, 14) et les chants latéraux des plaques (2, 3). Cette caractéristique apparaît également en figure 5, dans laquelle on a tracé la perpendiculaire (T) à la droite (D) reliant les deux centres des orifices (11') et (12') de la plaque (3).

Cette perpendiculaire (T) délimite en fait les deux circuits magnétiques associés aux deux bobines (9, 10). Les dents disposées en zone A et celles qui sont disposées en zone B appartiennent à deux circuits magnétiques que l'on peut considérer comme différents. La faible distance (e) empêche en effet, également du fait de la faible épaisseur des plaques (2, 3), des perturbations réciproques dues aux flux induits par les deux bobines (9, 10). Elle les réduit en tout état de cause à un niveau acceptable.

Le dessin ne montre que la configuration de la plaque (3). Il en va cependant exactement de même en plaque (2). De part et d'autre de la ligne (T), les dents sont espacées entre elles de 60°, et ont une largeur angulaire de 30° correspondant à la largeur des pôles de l'aimant permanent constituant le rotor (12 pôles, d'où un secteur angulaire par pôle de 360/12 = 30°).

Les dents du secteur A et celles du secteur B présentent en outre un décalage de 15° qui explique notamment la dissymétrie des écarts angulaires entre les dents situées de part et d'autre de la ligne (T), a proximité des deux chants longitudinaux de la plaque (3). L'un de ces écarts étant très faible, la plaque (2) ne pourra comporter que cinq dents (5), alors que la plaque (3) en comporte six (6). Le nombre de pas par tour est par conséquent égal à 24.

Plus généralement, un rotor à n pôles coopérera avec une plaque (2) à n/2-1 dents et une plaque (3) à n/2 dents. Cette dernière aura n/4 dents de part et d'autre de la ligne (T), alors que sur la plaque (2), il y aura n/4 dents d'un côté et n/4-1 de l'autre. Le nombre de pas disponible par tour se monte alors à 2n.

La figure 6 précise la forme des entretoises (7, 8) munies de deux épaulements impliquant dans ce cas un diamètre des orifices (11', 12') supérieur à celui des orifices (11, 12). L'arbre de sortie du rotor (non visible) est en outre muni d'un pignon (15) d'entraînement d'un mécanisme aval (réducteur...).

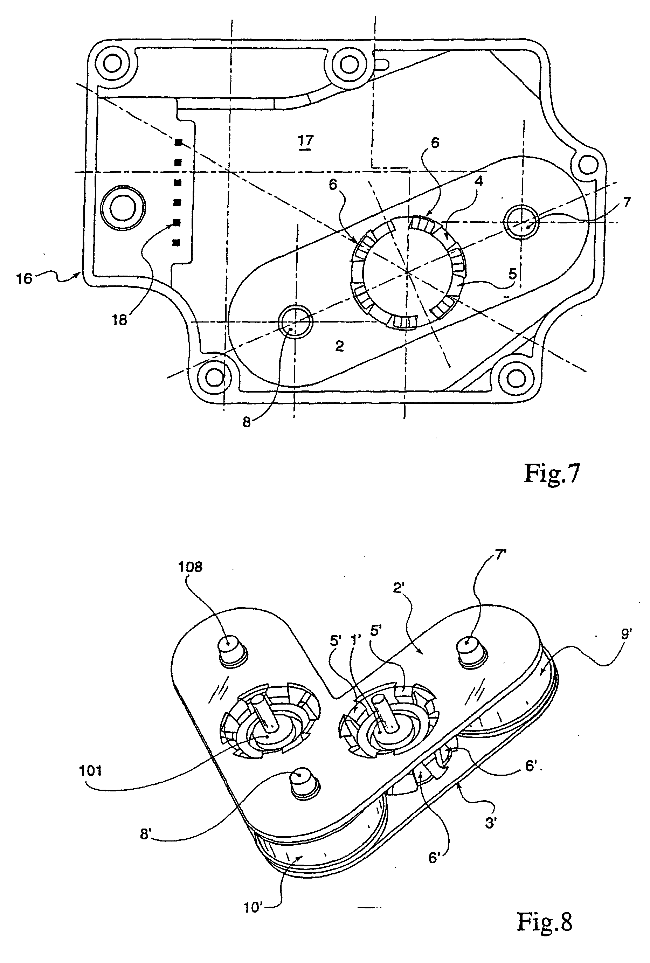

La figure 7 représente très schématiquement un boîtier (16), par exemple d'actionneur, dans lequel un moteur selon l'invention est disposé au contact du fond (17). Un connecteur (18) permet de relier l'actionneur (16) à une unité centrale électronique.

La figure 8 montre un double moteur en V, dans lequel on peut aisément individualiser les moteurs décrits précédemment. Des plaques en V (2', 3') remplacent les plaques précédentes (2, 3), et la bobine (10') est commune aux deux moteurs, ainsi que son entretoise (8'). Le second rotor (101) est localisé entre les entretoises (8') et (108). Les zones de distance minimale sont situées, à l'intérieur du V, à proximité de la jonction des deux branches.

Une structure à plus de deux moteurs pourrait bien entendu être envisagée. Plus généralement, la description ci-dessus n'est pas limitative de l'invention, mais n'en constitue qu'un exemple. L'invention englobe au contraire les variantes qui sont à la portée de l'homme de l'art.

## Revendications

1. Moteur pas à pas à deux bobines d'induction (9, 10) magnétique et un rotor (1) constitué d'un aimant permanent à n potes, la culasse magnétique étant constituée de plaques planes parallèles (2, 3) reliées par deux entretoises (7, 8) autour desquelles sont disposées lesdites bobines (9, 10), deux orifices coaxiaux (13, 14) pratiqués dans lesdites plaques (2, 3) délimitant un espace d'allure cylindrique dans lequel est placé le rotor (1), chaque plaque (2, 3) comportant des dents (5, 6) orientées sensiblement perpendiculairement à son plan, en direction de l'autre plaque (3, 2), disposées en périphérie des orifices (13, 14) de passage du rotor (1), les dents (5, 6) issues des deux plaques (2, 3) s'interpénétrant pour former une cage dans laquelle est logé le rotor (1), **caractérisé en ce que** lesdites plaques sont au nombre de deux, l'une des plaques (3) comporte n/2 dents, alors que la seconde (2) n'en comporte que n/2-1, les circuits magnétiques associés à chaque bobine (9, 10) comportant également respectivement n/2 et n/2-1 dents.

2. Moteur pas à pas selon la revendication précédente, **caractérisé en ce que** la distance (e) entre la périphérie de chaque orifice (13, 14) de passage du rotor (1) et le bord libre de la plaque (2, 3) dans laquelle il est pratiqué est minimale au niveau du diamètre de l'orifice (13, 14) perpendiculaire à la droite (D) reliant l'axe des entretoises (7, 8), de sorte que les flux magnétiques des deux bobines (9, 10) ne se perturbent pas et sont canalisés, via lesdites dents (5, 6), de chaque côté d'un plan formé par les diamètres des deux orifices (13, 14) coaxiaux.

3. Moteur pas à pas selon la revendication précédente, **caractérisé en ce que** les bobines (9, 10) sont identiques et ledit diamètre est la médiatrice du segment joignant les axes des entretoises (7, 8).

4. Moteur pas à pas selon l'une quelconque des revendications précédentes, **caractérisé en ce que** les dents (5, 6) formant la cage entourant le rotor (1) ont une largeur angulaire sensiblement égale à celle des pôles du rotor (1), au moins dans la zone de liaison à la plaque (2, 3) dont elles sont issues.

5. Moteur pas à pas selon l'une quelconque des revendications précédentes, **caractérisé en ce que** les dents (5, 6) disposées de part et d'autre du diamètre de l'orifice (13, 14) de passage du rotor (1) perpendiculaire à la droite (D) reliant les axes des entretoises sont disposées selon une périodicité égale au double de la largeur angulaire de chaque dent (5, 6) dans sa zone de liaison à la plaque, et sont de forme trapézoïdale, leur largeur angulaire se réduisant vers leur extrémité libre.

6. Moteur pas à pas selon la revendication précédente, **caractérisé en ce que** les groupes de dents (5, 6) disposés de part et d'autre du plan coupant les diamètres des orifices (13, 14) de passage du rotor (1) perpendiculairement à la ligne (D) joignant les axes des entretoises (7, 8) sont décalés d'un quart de période angulaire.

7. Moteur pas à pas selon l'une des revendications précédentes, **caractérisé en ce que** les plaques (2, 3) ont une portion centrale d'allure rectangulaire et des extrémités semi-circulaires, l'orifice de passage (13, 14) du rotor (1) étant centré dans la portion centrale, et **en ce que** les axes des entretoises (7, 8), qui sont d'allure cylindrique, contiennent les centres des arcs semi-circulaires desdites extrémités.

8. Association d'au moins deux moteurs selon les revendications précédentes, **caractérisée en ce que** les plaques (2', 3') desdits moteurs sont solidarisées au niveau d'une entretoise (8'), les moteurs contigus ayant par conséquent une entretoise (8') et une bobine (10') commune.

9. Association d'au moins deux moteurs selon la revendication précédente, **caractérisée en ce que** les plaques (2', 3') disposées de chaque côté des entretoises (7', 8', 108) sont d'une seule pièce.

## Patentansprüche

1. Schrittschaltmototor mit zwei Induktionsmagnetspulen (9, 10) und einem von einem Permanentmagneten mit n Polen gebildeten Rotor, mit einem Magnetjoch aus zwei parallelen ebenen Platten (2, 3), die durch zwei Querbolzen (7, 8) mit einander verbunden sind, um welche herum die genannten Spulen (9, 10) angeordnet sind, mit zwei in den genannten Platten (2, 3) vorgesehenen koaxialen Öffnungen (13, 14), welche einen zylinderförmigen Raum begrenzen, in welchem der Rotor (1) angeordnet ist, wobei jede Platte (2, 3) entlang dem Umfang der Durchtrittsöffnungen (13,14) für den Rotor angeordnete, im wesentlichen rechtswinklig zu ihrer jeweiligen Platte und in Richtung zu der jeweils anderen Platte (3, 2) ausge -richtete Zähne bzw. Zinken (5, 6) aufweist und wobei die von den beiden Platten (2, 3) ausgehenden Zähne (5, 6) sich gegenseitig durchdringen unter Bildung eines Käfigs, in welchem der Rotor (1) untergebracht ist,
**dadurch gekennzeichnet, dass** die genannten Platten zwei an der Zahl sind, dass eine der Platten (3) n/2 Zähne, die zweite Platte (2) hingegen nur n/2-1 Zähne aufweist, und dass die jeweils jeder Spulen (9, 10) zuge-ordneten Magnet kreise gleichfalls n/2 bzw. n/2-1 Zähne besitzen.

2. Schrittmotor nach dem vorhergehenden Anspruch, dadurch gekenn-zeichnet, dass der Abstand (e) zwischen dem Umfang jeweils jeder Durch-trittsöffnung (13, 14) für den Rotor (1) und dem freien Rand der Platte, in welcher die Öffnung angebracht ist, am kleinsten an der Stelle des zu der die Querbolzen (7, 8) verbindenden Geraden (D) rechtwinkligen Durch-messers der Öffnung (13, 14) ist, derart dass die Magnetflüsse der beiden Spulen (9, 10) einander nicht stören und über die genannten Zähne bzw. Zinken (5, 6) zu beiden Seiten einer durch die Durchmesser der beiden ko-axialen Öffnungen (13, 14) gebildeten Ebene kanalisiert werden.

3. Schrittmotor nach dem vorhergehenden Anspruch, dadurch gekenn-zeichnet, dass die Spulen (9,10) gleichartig sind und der genannte Durch-messer die Mittellinie des an die Achsen der Spulen (7, 8) angrenzenden bzw. sie verbindenden Segments ist.

4. Schrittmotor nach einem der vorhergehenden Ansprüche, **dadurch gekennzeichnet, dass** die den den Rotor (1) umschließenden Käfig bilden-den Zähne (5, 6) wenigstens im Bereich ihrer Verbindung mit der Platte (2, 3), aus welcher sie hervorgehen, eine im wesentlichen gleiche Winkelbreite wie die Pole des Rotors (1) besitzen.

5. Schrittmotor nach einem der vorhergehenden Ansprüche, **dadurch gekennzeichnet, dass** die Zähne (5, 6), die zu beiden Seiten des zu der Verbindungsgeraden (D) zwischen den Achsen der Querbolzen rechtwink-ligen Durchmessers der Durchtrittdsöffnung (13, 14) für den Rotor (1) angeordnet sind, mit einer Periodozität angeordnet sind, die gleich der doppelten Winkelbreite jedes Zahns (5, 6) im Bereich seiner Verbindung mit der Platte ist, und dass die Zähne trapezoidförmig mit einer sich in Richtung zu ihrem freien Ende verringernden Winkelbreits ausgebildet sind.

6. Schrittmotor nach dem vorhergehenden Anspruch, dadurch ge-kennzeichnet, dass die Gruppen von Zähnen (5, 6), die zu beiden Seiten der Ebene angeordnet sind, welche die Durchmesser der Durchtrittsöffnun-gen (13, 14) für den Rotor (1) rechtwinklig zu der Verbindungsgeraden der Achsen der Querbolzen (7, 8) schneidet, um eine Viertel Winkelperiode versetzt sind.

7. Schrittmotor nach einem der vorhergehenden Ansprüche, **dadurch gekennzeichnet, dass** die Platten (2, 3) einen rechteckigen Mittelteil und halbkreisförmige Enden aufweisen, wobei die Durchtrittsöffnung (13, 14) für den Rotor (1) im Mittelteil zentriert ist, und dass die Achsen der zylin-derförmigen Querbolzen (7, 8) die Zentren der halbkreisförmigen Bögen der Enden enthalten.

8. Aggregat von wenigstens zwei Motoren nach den vorhergehenden Ansprüchen, **dadurch gekennzeichnet, dass** die Platten (2', 3') dieser Moto-ren im Bereich eines Querbolzens (8') miteinander verbunden sind, derart, dass die benachbarten Motoren somit einen Querbolzen (8') und eine Spule gemeinsam haben.

9. Aggregat von wenigstens zwei Motoren nach dem vorhergehenden Anspruch, **dadurch gekennzeichnet, dass** die zu beiden Seiten der Quer-bolzen (7', 8', 108) angeordneten Platten (2', 3') einstückig ausgebildet sind.

## Claims

1. Stepper motor with two magnetic induction coils (9, 10) and a rotor (1) consisting of a permanent magnet with n poles, the magnetic yoke consisting of plane parallel plates (2, 3) connected by two spacers (7, 8) around which the said coils (9, 10) are arranged, two coaxial orifices (13, 14) made in the said plates (2, 3) delimiting a space of cylindrical form in which the rotor (1) is placed, each plate (2, 3) comprising teeth (5, 6) oriented substantially perpendicularly to its plane, towards the other plate (3, 2), and arranged at the periphery of the through orifices (13, 14) for the rotor (1), the teeth (5, 6) emanating from the two plates (2, 3) interpenetrating to form a cage in which the rotor (1) is housed, **characterized in that** the said plates are two in number, one of the plates (3) comprising n/2 teeth, while the second (2) comprises only n/2-1, the magnetic circuits associated with each coil (9, 10) likewise comprising respectively n/2 and n/2-1 teeth.

2. Stepper motor according to the preceding claim, **characterized in that** the distance (e) between the periphery of each through orifice (13, 14) for the rotor (1) and the free edge of the plate (2, 3) in which it is made is a minimum at the diameter of the orifice (13, 14) perpendicular to the straight line (D) connecting the axis of the spacers (7, 8), so that the magnetic fluxes of the two coils (9, 10) do not disturb one another and are channelled, via the said teeth (5, 6), on each side of a plane formed by the diameters of the two coaxial orifices (13, 14).

3. Stepper motor according to the preceding claim, **characterized in that** the coils (9, 10) are identical and the said diameter is the mid-perpendicular of the segment joining the axes of the spacers (7, 8).

4. Stepper motor according to any one of the preceding claims, **characterized in that** the teeth (5, 6) forming the cage surrounding the rotor (1) have an angular width substantially equal to that of the poles of the rotor (1), at least in the zone of connection to the plate (2, 3) from which they emanate.

5. Stepper motor according to any one of the preceding claims, **characterized in that** the teeth (5, 6) arranged on either side of the diameter of the through orifice (13, 14) for the rotor (1) perpendicular to the straight line (D) connecting the axes of the spacers are arranged according to a periodicity equal to twice the angular width of each tooth (5, 6) in its zone of connection to the plate, and are of trapezoidal shape, their angular width reducing towards their free end.

6. Stepper motor according to the preceding claim, **characterized in that** the groups of teeth (5, 6) arranged on either side of the plane cutting the diameters of the through orifices (13, 14) for the rotor (1) perpendicularly to the line (D) joining the axes of the spacers (7, 8) are offset by a quarter of an angular period.

7. Stepper motor according to one of the preceding claims, **characterized in that** the plates (2, 3) have a central portion of rectangular form and semicircular ends, the through orifice (13, 14) for the rotor (1) being centred in the central portion, and **in that** the axes of the spacers (7, 8), which are of cylindrical form, contain the centres of the semicircular arcs of the said ends.

8. Association of at least two motors according to the preceding claims, **characterized in that** the plates (2', 3') of the said motors are secured together at a spacer (8'), the contiguous motors consequently having a common spacer (8') and coil (10').

9. Association of at least two motors according to the preceding claim, **characterized in that** the plates (2', 3') arranged on each side of the spacers (7', 8', 108) are one component.
